# FASCICULE DE BREVET EUROPEEN

(11) **EP 4 673 982 B1**
(45) Date de publication et mention de la délivrance du brevet: **22.04.2026**
(21) Numéro de dépôt: 25728009.9
(22) Date de dépôt: 19.05.2025
(51) Int. Cl.: H01M 4/04, H01M 4/70, H01M 4/66, H01M 50/533

(54) **LANGUETTES DE COLLECTE DE COURANT D'ÉLECTRODES**
STROMSAMMELLASCHEN FÜR ELEKTRODEN
CURRENT-COLLECTING TABS FOR ELECTRODES

(30) Priorité: 23.05.2024 FR 2405289
(43) Date de publication de la demande: 07.01.2026
(73) Titulaire: Verkor, 38000 Grenoble (FR)
(72) Inventeur: BAE, Yunju, 3800 Grenoble (FR); SHIN, Hyuk, 3800 Grenoble (FR)
(74) Mandataire: Novagraaf Group
(86) Numéro de dépôt international: PCT/IB2025/055194
(87) Numéro de publication internationale: WO 2025/243189

(56) Documents cités:
- EP-A1- 4 386 970
- WO-A1-2023/123274
- KR-A- 20160 079 227
- US-A1- 2023 327 132

## Description

La présente invention a trait aux électrodes de cellules électrochimiques de géométrie prismatique ou en sachet et plus particulièrement aux languettes de collecte de courant de telles électrodes.

Ces électrodes sont fabriquées à partir d'un feuillet métallique (typiquement du cuivre ou de l'aluminium) initialement enroulé sur lui-même sous la forme d'une bobine. Une fois déroulé, le feuillet métallique est revêtu en partie avec un matériau actif. Une portion du feuillet métallique non revêtue de matériau actif s'étend sur un bord longitudinal du feuillet métallique. Lors d'une opération de crantage, des longuettes de collecte de courant sont formées le long du feuillet métallique par découpe directement dans la portion métallique non revêtue de matériau actif. Ces languettes de collecte de courant dépourvues de matériau actif s'étendent en saillie depuis un bord longitudinal de la portion active.

Chacune des languettes de collecte de courant est de forme rectangulaire comportant une portion proximale liée au feuillet métallique et, aptes à être raccordée électriquement à un collecteur de courant et une portion distale apte à recevoir un marquage (une inscription, un code ou toute autre marque d'identification provisoire pendant la fabrication de l'électrode). La portion distale fait saillie de la portion proximale. Une fois la portion proximale est soudée à un collecteur de courant, la portion distale est enlevée lors d'une opération d'ébarbage.

Un inconvénient de ces languettes de collecte de courant de forme rectangulaire est qu'elles comportent, à leurs bords libres en regard de leurs bases d'attache au feuillet métallique, des coins à angle droit.

En effet, compte tenu de sa longueur, une languette de collecte de courant s'étendant horizontalement de l'électrode en défilement sur un convoyeur est susceptible, sous l'effet de son propre poids, de se courber vers le bas et, éventuellement, d'entrer en contact avec un élément du convoyeur ou, plus généralement, avec un obstacle. En l'occurrence d'un tel contact, l'angle droit au bord libre de la languette de collecte de courant cause, le plus souvent, un froissement de celle-ci.

Lorsqu'il rencontre un obstacle sur sa ligne de déplacement, un angle droit sur le bord libre de la languette de collecte de courant a tendance à agir comme un point d'ancrage provoquant un endommagement de la languette de collecte de courant. Autrement dit, l'aspect perpendiculaire distinctif des angles droits sur le bord libre des languettes de collecte de courant les rend susceptibles de s'accrocher ou de se coincer lorsqu'ils rencontrent un obstacle lors du convoyage des électrodes.

Plus généralement, des languettes de collecte de courant de forme rectangulaire comportant une portion proximale liée au feuillet métallique et une portion distale en saillie de celle-ci sont, lors du convoyage des électrodes, sujet à des dommages potentiels. Lorsque de tels dommages se produisent, les électrodes sont mises au rebus et les lignes de production sont, pendant ce temps, mises à l'arrêt, ralentissant la cadence de production de cellules électrochimiques et grevant le rendement global de l'usine.

WO 2023/123274 Al décrit une électrode composée d'un feuillet métallique avec une portion active recouverte d'un matériau actif et une portion métallique nue le long d'un bord longitudinal. Cette portion nue comporte une languette de collecte de courant qui dépasse de la portion active. La languette comprend une partie proximale liée au feuillet et une partie distale en saillie. Cette partie distale présente deux bords latéraux : le second bord se rapproche du premier à mesure qu'il s'éloigne de la portion proximale, ce qui signifie que la languette se rétrécit vers son extrémité.

Un objet de la présente invention est de remédier aux inconvénients précités.

Un autre objet de la présente invention est d'éviter tout risque d'endommagement des languettes de collecte de courant lors du convoyage des électrodes aptes à la fabrication de cellules électrochimiques de géométrie prismatique ou en sachet.

Un autre objet de la présente invention est de réduire les défauts susceptibles de se produire lors de l'acheminement de la feuille d'électrode sur un convoyeur et, par conséquent, d'améliorer la cadence de production des cellules de batteries électriques.

A cet effet, il est proposé, en premier lieu, une électrode comprenant un feuillet métallique comportant
- une portion active revêtue d'un matériau actif;
- une portion métallique dépourvue de matériau actif s'étendant sur un bord longitudinal du feuillet métallique, cette portion métallique comprenant une languette de collecte de courant s'étendant en saillie depuis un bord longitudinal de la portion active;
   ladite languette de collecte de courant comprenant
- une portion proximale liée au feuillet métallique;
- une portion distale faisant saillie de la portion proximale ;
- une ligne de pliage ou une ligne de prédécoupe séparant la portion proximale de la portion distale, ladite ligne de pliage ou de prédécoupe comprenant des affaiblissements telles que des fentes ou des rayures ;
   électrode dans laquelle la portion distale comprend
- un premier bord latéral;
- un deuxième bord latéral en regard du premier bord latéral, ce deuxième bord latéral se rapprochant du premier bord latéral, selon que l'on s'éloigne de la portion proximale.

Diverses caractéristiques supplémentaires peuvent être prévues, seules ou en combinaison :
- la portion distale est de forme triangulaire, demi-circulaire, demi-elliptique, trapézoïdale, rectangulaire arrondi en un coin, rectangulaire arrondi en deux coins d'un même côté, rectangulaire avec un coin rogné, rectangulaire avec deux coins rognés d'un même côté, rectangulaire avec un coin rogné et un coin arrondi d'un même côté ;
- la largeur de la languette de collecte de courant dans la direction du bord longitudinal du feuillet métallique est supérieure à la moitié de la longueur de la languette de collecte de courant, aux deux tiers de la longueur de la languette de collecte de courant, ou aux trois quarts de la longueur de la languette de collecte de courant ;
- la portion distale est apte à recevoir un marquage ;
- la ligne de pliage ou la ligne de prédécoupe est raccordée au premier bord latéral et/ ou au deuxième bord latéral ;
- la portion distale est apte à recevoir un marquage ;
- la ligne de pliage ou de prédécoupe est apte à faciliter le pliage de la portion distale par rapport à la portion proximale.

Il est proposé, en deuxième lieu, un procédé de fabrication d'une électrode comprenant un feuillet métallique comportant
- une portion active revêtue d'un matériau actif;
- une portion métallique dépourvue de matériau actif s'étendant sur un bord longitudinal du feuillet métallique,
   ce procédé comprenant une étape de découpe dans la portion métallique d'une languette de collecte de courant s'étendant en saillie depuis un bord longitudinal de la portion active, cette languette de collecte de courant comprenant
- une portion proximale liée au feuillet métallique;
- une portion distale, la portion distale faisant saillie de la portion proximale; procédé dans lequel, l'étape de découpe comprend
- une première découpe d'un premier bord latéral de la portion distale;
- une deuxième découpe d'un deuxième bord latéral de la portion distale en regard du premier bord latéral, ce deuxième bord latéral se rapprochant du premier bord latéral, selon que l'on s'éloignant de la portion proximale,
- une étape de création d'une ligne de pliage ou d'une ligne de prédécoupe entre la portion proximale et la portion distale de la languette de collecte de courant, ladite ligne de pliage ou de prédécoupe comprenant des affaiblissements telles que des fentes ou des rayures.

Diverses caractéristiques supplémentaires peuvent être prévues, seules ou en combinaison :
- le procédé présenté ci-dessus comprend, en outre, une étape de convoyage du feuillet métallique, le deuxième bord latéral étant en aval, par rapport au sens de convoyage du feuillet métallique, du premier bord latéral ;
- la portion distale est de forme triangulaire, demi-circulaire, demi-elliptique, trapézoïdale, rectangulaire arrondi en un coin, rectangulaire arrondi en deux coins d'un même côté, rectangulaire avec un coin rogné, rectangulaire avec deux coins rognés d'un même côté, rectangulaire avec un coin rogné et un coin arrondi d'un même côté ;
- le procédé présenté ci-dessus comprend, en outre, une étape de création d'une ligne de pliage ou une ligne de prédécoupe dans la portion distale ;
- la ligne de pliage ou la ligne de prédécoupe est raccordée au premier bord latéral et/ ou au deuxième bord latéral.

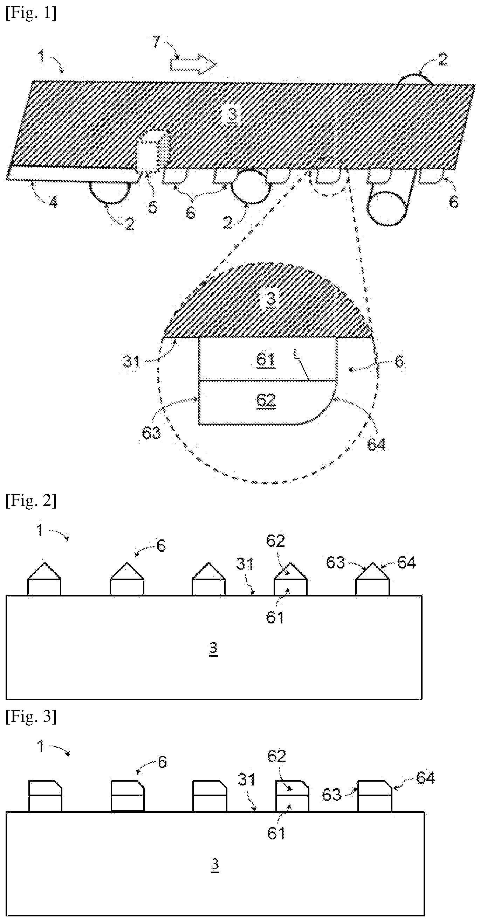

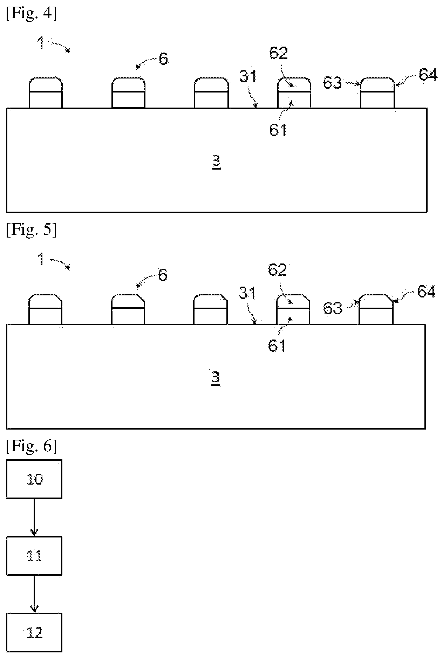

D'autres caractéristiques et avantages de l'invention apparaîtront plus clairement et de manière concrète à la lecture de la description ci-après de modes de réalisation, laquelle est faite en référence aux dessins annexés dans lesquels :
la figure [Fig.1] illustre schématiquement un feuillet métallique selon divers modes de réalisation ;
la figure [Fig.2] illustre schématiquement un premier mode de réalisation du feuillet métallique ;
la figure [Fig.3] illustre schématiquement un deuxième mode de réalisation du feuillet métallique ;
la figure [Fig.4] illustre schématiquement un troisième mode de réalisation du feuillet métallique ;
la figure [Fig.5] illustre schématiquement un quatrième mode de réalisation du feuillet métallique ;
la figure [Fig.6] illustre schématiquement des étapes d'un procédé de fabrication d'une électrode comprenant un feuillet métallique selon divers modes de réalisation.

Sur la [Fig.1], est représenté un feuillet **1** métallique en défilement sur un convoyeur **2.** Ce feuillet **1** métallique comporte une portion **3** active revêtue d'un matériau actif et une portion **4** métallique dépourvue de matériau actif s'étendant sur un bord longitudinal du feuillet **1** métallique.

Un dispositif **5** de découpe (ou de crantage) est configuré pour découper, dans la portion **4** métallique dépourvue de matériau actif, une languette **6** de collecte de courant s'étendant en saillie depuis un bord **31** longitudinal de la portion **3** active (ou, de manière équivalente, du feuillet **1** métallique).

Tel qu'il est illustré par la [Fig.1], la languette **6** de collecte de courant comprend une portion **61** proximale liée au feuillet **1** métallique. La languette 6 de collecte de courant est apte à être raccordée électriquement à un collecteur de courant (non représenté sur les dessins). La languette 6 de collecte de courant comprend une portion **62** distale. La portion 62 distale est apte à recevoir un marquage. La portion **62** distale fait saillie de la portion **61** proximale.

La portion **62** distale comprend un premier bord **63** latéral et un deuxième bord **64** latéral en regard du premier bord **63** latéral, ce deuxième bord **64** latéral se rapprochant, en s'éloignant de la portion **61** proximale, du premier bord **63** latéral.

La languette 6 comprend une ligne de pliage ou une ligne de prédécoupe. La ligne L de pliage ou de prédécoupe est agencée entre la portion **61** proximale et la portion **62** distale. Cette ligne L peut comprendre des affaiblissements tels que des fentes ou des rayures facilitant le pliage de la portion **62** distale par rapport à la portion 61 proximale.

Avantageusement, la forme particulière du deuxième bord **64** latéral évite la formation d'un angle droit susceptible d'agir comme un point d'accrochage ou d'ancrage provoquant un endommagement de la languette **6** de collecte de courant lorsqu'elle rencontre un obstacle lors de son déplacement sur le convoyeur **2.** Par conséquent, moins de dommages sont occasionnés sur la languette **6** de collecte de courant lors du convoyage des électrodes aptes à la fabrication de cellules électrochimiques de géométrie prismatique ou en sachet.

De plus, la ligne L de pliage ou de prédécoupe entre la portion **61** proximale et la portion **62** distale permet, avantageusement, d'absorber l'effet d'une éventuelle collision entre la languette **6** de collecte de courant et un obstacle extérieur. Ainsi, lors d'une collision entre la languette 6 de collecte de courant et un obstacle extérieur, la portion 62 distale pourra tourner autour de la ligne L, ce qui réduit le risque de détérioration de ladite languette 6 de collecte de courant.

Dans des modes de réalisation, la portion **62** distale est de forme triangulaire tel qu'il est illustré par la [Fig.2], demi-circulaire, demi-elliptique, trapézoïdale tel qu'il est illustré par la [Fig.3], rectangulaire arrondi en un coin, rectangulaire arrondi en deux coins d'un même côté tel qu'il est illustré par la [Fig.4], rectangulaire avec un coin rogné, rectangulaire avec deux coins rognés d'un même côté, ou rectangulaire avec un coin rogné et un coin arrondi d'un même côté tel qu'il est illustré par la [Fig.5]. De telles formes sont, avantageusement, faciles à mettre en œuvre par le dispositif **5** de découpe.

Dans un autre mode de réalisation, la largeur de la languette **6** de collecte de courant dans la direction du bord **31** longitudinal de la portion **3** active est supérieure à la moitié de la longueur (dans une direction perpendiculaire au bord **31** longitudinal de la portion **3** active) de la languette **6** de collecte de courant, aux deux tiers de la longueur de la languette **6** de collecte de courant, ou aux trois quarts de la longueur de la languette **6** de collecte de courant.

De tels rapports entre les dimensions de la languette **6** de collecte de courant permettent, avantageusement, d'éviter la flexion libre de la languette **6** de collecte de courant sous l'effet de son propre poids. Une collusion entre la languette **6** de collecte de courant et un élément du convoyeur **2** peut, ainsi, être évitée.

La ligne de pliage ou la ligne de prédécoupe est, dans un mode de réalisation, raccordée au premier bord **63** latéral et/ou au deuxième bord **64** latéral. Autrement dit, la ligne de pliage ou de découpe comprend une partie commençant ou se terminant sur le premier bord **63** latéral et/ou sur le deuxième bord **64** latéral. En fonction de sa direction, une telle ligne de pliage ou de prédécoupe permet de privilégier une direction déformation de la languette **6** de collecte de courant lorsqu'elle rencontre un obstacle. Un froissement de la languette **6** de collecte de courant peut, ainsi, être évité.

En se reportant à la [Fig.6], un procédé de fabrication d'une électrode intégrant le feuillet **1** métallique comprend une étape de découpe **10,** dans la portion **4** métallique, d'une languette **6** de collecte de courant s'étendant en saillie depuis un bord **31** longitudinal de la portion **3** active. Cette étape de découpe comprend une première découpe du premier bord **63** latéral de la portion **62** distale et d'une deuxième découpe du deuxième bord **64** latéral de la portion **62** distale en regard du premier bord **63** latéral. En s'éloignant de la portion **61** proximale, le deuxième bord **64** latéral se rapproche du premier bord **63** latéral de sorte à éviter la formation d'un angle droit susceptible d'agir comme un point d'accrochage ou d'ancrage provoquant un endommagement de la languette de collecte de courant lorsqu'elle rencontre un obstacle lors de son déplacement.

En outre, le procédé de fabrication comprend une étape de création 12 d'une ligne L de pliage ou de prédécoupe entre la portion **61** proximale et la portion **6 2** distale. La ligne de pliage ou ligne de prédécoupe comprend des affaiblissements telles que des fentes ou des rayures.

Lors du convoyage (étape 11 sur la [Fig.6]) du feuillet **1** métallique, le deuxième bord **64** latéral est en aval, par rapport au sens **7** de convoyage du feuillet **1** métallique, du premier bord **63** latéral. Une telle disposition des bords **63, 64** latéraux de la portion **62** distale par rapport au sens **7** de convoyage implique le deuxième bord **64** latéral qui concourt à réduire les risques de froissement de la languette **6** de collecte de courant lors d'une éventuelle entrée en contact avec un élément du convoyeur **2** de convoyage du feuillet **1** métallique.

La ligne de pliage ou la ligne de prédécoupe est raccordée au premier bord **(63)** latéral et/ou au deuxième bord **(64)** latéral.

## Revendications

1. Electrode comprenant un feuillet **(1)** métallique comportant
- une portion **(3)** active revêtue d'un matériau actif;
- une portion **(4)** métallique dépourvue de matériau actif s'étendant sur un bord longitudinal du feuillet métallique, cette portion métallique comprenant une languette **(6)** de collecte de courant s'étendant en saillie depuis un bord longitudinal de la portion **(3)** active;
ladite languette **(6)** de collecte de courant comprenant
- une portion **(61)** proximale liée au feuillet **(1)** métallique;
- une portion **(62)** distale faisant saillie de la portion **(61)** proximale ;
- une ligne de pliage ou une ligne de prédécoupe séparant la portion **(61)** proximale de la portion **(62** ) distale, ladite ligne (L) de pliage ou de prédécoupe comprenant des affaiblissements telles que des fentes ou des rayures ;
électrode dans laquelle la portion **(62)** distale comprend
- un premier bord **(63)** latéral;
- un deuxième bord **(64)** latéral en regard du premier bord latéral, ce deuxième bord (64) latéral se rapprochant du premier bord **(63)** latéral, selon que l'on s'éloigne de la portion **(61)** proximale.

2. Electrode selon la revendication précédente, **caractérisé e en ce que** la portion **(62)** distale est de forme triangulaire, demi-circulaire, demi-elliptique, trapézoïdale, rectangulaire arrondi en un coin, rectangulaire arrondi en deux coins d'un même côté, rectangulaire avec un coin rogné, rectangulaire avec deux coins rognés d'un même côté, rectangulaire avec un coin rogné et un coin arrondi d'un même côté.

3. Electrode selon la revendication 1 ou 2, **caractérisé e en ce que** la largeur de la languette **(6)** de collecte de courant dans la direction du bord longitudinal du feuillet métallique est supérieure à la moitié de la longueur de la languette **(6)** de collecte de courant, aux deux tiers de la longueur de la languette **(6)** de collecte de courant, ou aux trois quarts de la longueur de la languette **(6)** de collecte de courant.

4. Electrode selon l'une quelconque des revendications précédentes, **caractérisée en ce que** la ligne de pliage ou la ligne de prédécoupe est raccordée au premier bord latéral et/ou au deuxième bord latéral.

5. Electrode selon l'une quelconque des revendications précédentes dans laquelle, la portion (62) distale est apte à recevoir un marquage.

6. Electrode selon l'une quelconque des revendications précédentes dans laquelle, la ligne de pliage ou de prédécoupe est apte à faciliter le pliage de la portion (62) distale par rapport à la portion (61) proximale.

7. Procédé de fabrication d'une électrode comprenant un feuillet **(1)** métallique comportant
- une portion **(3)** active revêtue d'un matériau actif;
- une portion **(4)** métallique dépourvue de matériau actif s'étendant sur un bord longitudinal du feuillet métallique,
ce procédé comprenant une étape de découpe **(10)** dans la portion **(4)** métallique d'une languette **(6)** de collecte de courant s'étendant en saillie depuis un bord **(31)** longitudinal de la portion **(3)** active, cette languette **(6)** de collecte de courant comprenant
- une portion **(61)** proximale liée au feuillet **(1)** métallique;
- une portion **(62)** distale, la portion **(62)** distale faisant saillie de la portion **(61)** proximale;
procédé dans lequel, l'étape de découpe comprend
- une première découpe d'un premier bord **(63)** latéral de la portion distale;
- une deuxième découpe d'un deuxième bord **(64)** latéral de la portion distale en regard du premier bord **(63)** latéral, ce deuxième bord **(64)** latéral se rapprochant du premier bord **(63)** latéral, selon que l'on s'éloignant de la portion **(61)** proximale,
- une étape de création (12) d'une ligne de pliage ou d'une ligne de prédécoupe entre la portion **(61)** proximale et la portion (62) distale de la languette de collecte de courant, ladite ligne (L) de pliage ou de prédécoupe comprenant des affaiblissements telles que des fentes ou des rayures.

8. Procédé selon la revendication précédente, **caractérisé en ce qu'il** comprend, en outre, une étape de convoyage **(11)** du feuillet **(1)** métallique, le deuxième bord **(64)** latéral étant en aval, par rapport au sens **(7)** de convoyage du feuillet (1) métallique, du premier bord **(63)** latéral.

9. Procédé selon la revendication 7 ou 8, **caractérisé en ce que** la portion **(62)** distale est de forme triangulaire, demi-circulaire, demi-elliptique, trapézoïdale, rectangulaire arrondi en un coin, rectangulaire arrondi en deux coins d'un même côté, rectangulaire avec un coin rogné, rectangulaire avec deux coins rognés d'un même côté, rectangulaire avec un coin rogné et un coin arrondi d'un même côté.

10. Procédé selon l'une des quelconques des revendications 7 à 9, **caractérisé en ce que** la ligne de pliage ou la ligne de prédécoupe est raccordée au premier bord **(63)** latéral et/ou au deuxième bord **(64)** latéral.

## Patentansprüche

1. Elektrode, umfassend ein metallisches Blättchen **(1),** vorweisend:
- einen aktiven Abschnitt **(3),** der mit einem aktiven Material beschichtet ist;
- einen metallischen Abschnitt **(4)** ohne aktives Material, der sich über einen Längsrand des metallischen Blättchens erstreckt, dieser metallische Abschnitt umfassend eine Stromsammellasche **(6),** die sich von einem Längsrand des aktiven Abschnitts **(3)** vorstehend erstreckt;
die Stromsammellasche **(6)** umfassend:
- einen proximalen Abschnitt **(61),** der mit dem metallischen Blättchen **(1)** verbunden ist;
- einen distalen Abschnitt **(62),** der von dem proximalen Abschnitt **(61)** vorsteht;
- eine Faltlinie oder eine Vorschnittlinie, die den proximalen Abschnitt **(61)** von dem distalen Abschnitt **(62)** trennt, die Falt- oder Vorschnittlinie (L) umfassend Schwächungen wie Schlitze oder Ritzungen;
Elektrode, in der der distale Abschnitt **(62)** umfasst:
- einen ersten Seitenrand **(63);**
- einen zweiten Seitenrand **(64)** gegenüber dem ersten Seitenrand, wobei sich dieser zweite Seitenrand (64) dem ersten Seitenrand **(63)** nähert, je weiter man sich von dem proximalen Abschnitt **(61)** entfernt.

2. Elektrode nach dem vorstehenden Anspruch,
**dadurch gekennzeichnet, dass** der distale Abschnitt **(62)** dreieckig, halbkreisförmig, halbelliptisch, trapezförmig, rechteckig an einer Ecke abgerundet, rechteckig an zwei Ecken derselben Seite abgerundet, rechteckig mit einer abgeschnittenen Ecke, rechteckig mit zwei abgeschnittenen Ecken auf derselben Seite, rechteckig mit einer abgeschnittenen Ecke und einer abgerundeten Ecke auf derselben Seite ausgebildet ist.

3. Elektrode nach Anspruch 1 oder 2, **dadurch gekennzeichnet, dass** die Breite der Stromsammellasche **(6)** in Richtung des Längsrands des metallischen Blättchens größer als die Hälfte der Länge der Stromsammellasche **(6),** als zwei Drittel der Länge der Stromsammellasche **(6)** oder als drei Viertel der Länge der Stromsammellasche **(6)** ist.

4. Elektrode nach einem der vorstehenden Ansprüche,
**dadurch gekennzeichnet, dass** die Faltlinie oder die Vorschnittlinie an den ersten Seitenrand und/oder den zweiten Seitenrand anschließt.

5. Elektrode nach einem der vorstehenden Ansprüche, wobei der distale Abschnitt (62) geeignet ist, um eine Markierung aufzunehmen.

6. Elektrode nach einem der vorstehenden Ansprüche, wobei die Falt- oder Vorschnittlinie geeignet ist, um das Falten des distalen Abschnitts (62) relativ zu dem proximalen Abschnitt (61) zu ermöglichen.

7. Verfahren zum Herstellen einer Elektrode, umfassend ein metallisches Blättchen **(1),** vorweisend:
- einen aktiven Abschnitt **(3),** der mit einem aktiven Material beschichtet ist;
- einen metallischen Abschnitt **(4)** ohne aktives Material, der sich über einen Längsrand des metallischen Blättchens erstreckt,
dieses Verfahren umfassend einen Schritt des Ausschneidens **(10),** in dem metallischen Abschnitt **(4),** einer Stromsammellasche **(6),** die sich von einem Längsrand **(31)** des aktiven Abschnitts **(3)** vorstehend erstreckt, diese Stromsammellasche **(6)** umfassend:
- einen proximalen Abschnitt **(61),** der mit dem metallischen Blättchen **(1)** verbunden ist;
- einen distalen Abschnitt **(62),** wobei der distale Abschnitt **(62)** von dem proximalen Abschnitt **(61)** vorsteht;
Verfahren, wobei der Schritt des Ausschneidens umfasst:
- ein erstes Ausschneiden eines ersten Seitenrand **(63)** des distalen Abschnitts;
- ein zweites Ausschneiden eines zweiten Seitenrands **(64)** des distalen Abschnitts gegenüber dem ersten Seitenrand **(63),** wobei sich dieser zweite Seitenrand **(64)** dem ersten Seitenrand **(63)** nähert, je weiter man sich von dem proximalen Abschnitt **(61)** entfernt,
- einen Schritt der Erzeugens (12) einer Faltlinie oder einer Vorschnittlinie zwischen dem proximalen Abschnitt **(61)** und dem distalen Abschnitt (62) der Stromsammellasche, die Falt- oder Vorschnittlinie (L) umfassend Schwächungen wie Schlitze oder Ritzungen;

8. Verfahren nach dem vorstehenden Anspruch,
**dadurch gekennzeichnet, dass** es ferner einen Schritt des Förderns **(11)** des metallischen Blättchens **(1)** umfasst, wobei der zweite Seitenrand **(64)** stromabwärtig, relativ zu der Förderrichtung **(7)** des metallischen Blättchens (1), des ersten Seitenrands **(63)** liegt.

9. Verfahren nach Anspruch 7 oder 8, **dadurch gekennzeichnet, dass** der distale Abschnitt **(62)** dreieckig, halbkreisförmig, halbelliptisch, trapezförmig, rechteckig an einer Ecke abgerundet, rechteckig an zwei Ecken derselben Seite abgerundet, rechteckig mit einer abgeschnittenen Ecke, rechteckig mit zwei abgeschnittenen Ecken auf derselben Seite, rechteckig mit einer abgeschnittenen Ecke und einer abgerundeten Ecke auf derselben Seite ausgebildet ist.

10. Verfahren nach einem der Ansprüche 7 bis 9,
**dadurch gekennzeichnet, dass** die Faltlinie oder die Vorschnittlinie an den ersten Seitenrand **(63)** und/oder den zweiten Seitenrand **(64)** anschließt.

## Claims

1. Electrode comprising a metal sheet **(1),** said metal sheet comprising
- an active portion **(3)** coated with an active material;
- a metal portion **(4)** without active material, extending along a longitudinal edge of the metal sheet, this metal portion comprising a current-collecting tab **(6)** projecting from a longitudinal edge of the active portion **(3);**
said current-collecting tab **(6)** comprising
- a proximal portion **(61)** connected to the metal sheet **(1);**
- a distal portion **(62)** projecting from the proximal portion **(61);**
- a folding line or a pre-cut line separating the proximal portion **(61)** from the distal portion **(62),** said folding or pre-cut line (L) comprising weakenings such as slits or scores;
wherein the distal portion **(62)** comprises
- a first lateral edge **(63);**
- a second lateral edge **(64)** opposite the first lateral edge, this second lateral edge (64) coming closer to the first lateral edge **(63)** as the distance from the proximal portion **(61)** increases.

2. Electrode according to the preceding claim, **characterized in that** the distal portion **(62)** is triangular, semicircular, semi-elliptical, trapezoidal, rectangular having one rounded corner, rectangular having two rounded corners on the same side, rectangular having one trimmed corner, rectangular having two trimmed corners on the same side, rectangular having one trimmed corner and one rounded corner on the same side.

3. Electrode according to claim 1 or claim 2, **characterized in that** the width of the current-collecting tab **(6)** in the direction of the longitudinal edge of the metal sheet is greater than half the length of the current-collecting tab **(6),** greater than two-thirds the length of the current-collecting tab **(6),** or greater than three-quarters the length of the current-collecting tab **(6).**

4. Electrode according to any of the preceding claims, **characterized in that** the folding line or the pre-cut line is connected to the first lateral edge and/or the second lateral edge.

5. Electrode according to any of the preceding claims, wherein the distal portion (62) is capable of receiving a marking.

6. Electrode according to any of the preceding claims, wherein the folding or pre-cut line is capable of facilitating the folding of the distal portion (62) with respect to the proximal portion (61).

7. Method for manufacturing an electrode comprising a metal sheet **(1),** said metal sheet comprising
- an active portion **(3)** coated with an active material;
- a metal portion **(4)** without active material, extending along a longitudinal edge of the metal sheet,
this method comprising a cutting step **(10)** of cutting, into the metal portion **(4),** a current-collecting tab **(6)** projecting from a longitudinal edge **(31)** of the active portion **(3),** said current-collecting tab **(6)** comprising
- a proximal portion **(61)** connected to the metal sheet **(1);**
- a distal portion **(62),** the distal portion **(62)** projecting from the proximal portion **(61);**
wherein the cutting step comprises
- a first cut of a first lateral edge **(63)** of the distal portion;
- a second cut of a second lateral edge **(64)** of the distal portion opposite the first lateral edge **(63),** this second lateral edge **(64)** coming closer to the first lateral edge **(63)** as the distance from the proximal portion **(61)** increases,
- a creating step (12) of creating a folding line or a pre-cut line between the proximal portion **(61)** and the distal portion (62) of the current-collecting tab, said folding or pre-cut line (L) comprising weakenings such as slits or scores.

8. Method according to the preceding claim, **characterized in that** it further comprises a conveying step **(11)** of conveying the metal sheet **(1),** the second lateral edge **(64)** being downstream from the first lateral edge **(63)** with respect to the conveying direction **(7)** of the metal foil (1).

9. Method according to claim 7 or claim 8, **characterized in that** the distal portion **(62)** is triangular, semicircular, semi-elliptical, trapezoidal, rectangular having one rounded corner, rectangular having two rounded corners on the same side, rectangular having one trimmed corner, rectangular having two trimmed corners on the same side, rectangular having one trimmed corner and one rounded corner on the same side.

10. Method according to any of claims 7 to 9, **characterized in that** the folding line or the pre-cut line is connected to the first lateral edge **(63)** and/or the second lateral edge **(64).**
